# EUROPEAN PATENT APPLICATION

(11) **EP 4 243 373 A1**
(43) Date of publication of application: **13.09.2023**
(21) Application number: 21888326.2
(22) Date of filing: 27.09.2021
(51) Int. Cl.: H04L 65/40

(54) **VEHICLE DATA TRANSMISSION METHOD, APPARATUS AND SYSTEM, AND DEVICE AND STORAGE MEDIUM**

(30) Priority: 03.11.2020 CN 202011208078
(71) Applicant: United Automotive Electronic Systems Co., Ltd., Shanghai 201206 (CN)
(72) Inventor: HE, Bo, Shanghai 201206 (CN); WANG, Qinghua, Shanghai 201206 (CN); LIU, Ning, Shanghai 201206 (CN); LI, Le, Shanghai 201206 (CN); DING, Feng, Shanghai 201206 (CN)
(74) Representative: Bjerkén Hynell KB
(86) International application number: PCT/CN2021/121029
(87) International publication number: WO 2022/095628

(57) **Abstract**

The present application discloses a method, apparatus, device, and system for transmitting vehicle data, and a storage medium. The method comprises: a first node receives, based on a communication protocol, a data transmission instruction sent by a second node; the first node acquires target data from a memory according to the data transmission instruction; the first node sends the target data to the second node based on the communication protocol; the second node transmits the target data to a third node; and the third node establishes or trains a target algorithm model based on target data.

## Description

### TECHNICAL FIELD

The present application relates to the technical field of vehicle communications, in particular to a method, apparatus, device, and system for transmitting vehicle data, and a storage medium.

### BACKGROUND

The vehicle is usually equipped with at least one subsystem linked by at least one network or bus (such as a controller area network (CAN) bus), and each subsystem is equipped with an electronic control unit (ECU). With the development of vehicle intellectualization and networking, there is an increasing demand to upload data of the electronic control unit to a server and realize big data processing by means of an algorithm model prestored on the server.

The related art provides a method for transmitting vehicle data, including: a developer (usually a developer of the vehicle) of an application (APP) determines a communication matrix on the basis of a development demand, and assigns the demand to various electronic control units and communication devices (such as a Tbox) of the vehicle, as well as a server; the electronic control unit collects data required for application development according to the development demand in the communication matrix, and sends the required data to the communication device; the communication device sends the data of the electronic control unit to the server according to the development demand in the communication matrix; according to the development demand in the communication matrix, the server develops the application by means of the prestored algorithm model on the basis of the received data.

In the method for transmitting vehicle data provided by the related art, data collection and test tasks are assigned to various nodes (including the electronic control unit, the communication device, and the server), and a data acquisition time at each node is relatively long. In addition, since the communication between various nodes is based on the communication matrix, if a change to the development demand is required, it is necessary to re-assign the demand via the communication matrix, which takes a relatively long time, resulting in relatively low data transmission efficiency.

### BRIEF SUMMARY

The present application provides a method, apparatus, device, and system for transmitting vehicle data, and a storage medium, solving the problem of low data transmission efficiency of a method for transmitting vehicle data provided in the related art.

In an aspect, an embodiment of the present application provides a method for transmitting vehicle data, wherein the method is executed by a first node provided in a vehicle, and the method includes:
receiving, based on a communication protocol, a data transmission instruction sent by a second node provided in the vehicle;
acquiring target data from a memory according to the data transmission instruction; and
sending the target data to the second node based on the communication protocol, the target data being used to enable the second node to send the target data to a third node after receiving the target data, and the third node establishing or training a target algorithm model based on the target data after receiving the target data

In example embodiments, the data transmission instruction carries an address of the target data in the memory; and
the acquiring target data from a memory according to the data transmission instruction includes:
acquiring the target data from the memory according to the address indicated in the data transmission instruction.

In example embodiments, the acquiring the target data from the memory includes:
acquiring the target data from the address by means of a dynamic data acquisition function in the communication protocol.

In example embodiments, the first node includes an electronic control unit.

In example embodiments, the communication protocol is an XCP protocol or a UDS protocol.

In another aspect, an embodiment of the present application provides a method for transmitting vehicle data, wherein the method is executed by a second node provided in a vehicle, and the method includes:
sending, based on a communication protocol and according to a configuration file, a data transmission instruction to a first node provided in the vehicle, the data transmission instruction being used to trigger the first node to acquire target data from a memory according to the data transmission instruction;
receiving, based on the communication protocol, the target data sent by the first node; and
sending the target data to a third node, the target data being used to enable the third node to establish or train a target algorithm model based on the target data after receiving the target data.

In example embodiments, before the receiving target data sent by the first node provided in the vehicle, the method further includes:
receiving the configuration file sent by the third node.

In example embodiments, the configuration file is sent by the third node to the second node according to a unique identification of the second node.

In example embodiments, the configuration file includes an address of the target data in the memory; and
the sending, based on a communication protocol and according to a configuration file, a data transmission instruction to a first node provided in the vehicle includes:
sending, based on the communication protocol and according to the address indicated in the configuration file, the data transmission instruction to the first node, the data transmission instruction carrying the address.

In example embodiments, when a communication protocol integrated in the first node is an XCP protocol, the communication protocol integrated in the second node is an XCP protocol; and
when the communication protocol integrated in the first node is a UDS protocol, the communication protocol integrated in the second node is a UDS protocol.

In example embodiments, the second node includes a Tbox or a smart gateway.

In another aspect, an embodiment of the present application provides a method for transmitting vehicle data, wherein the method is executed by a third node, and the method includes:
receiving target data sent by a second node provided in a vehicle, the target data being acquired, according to a data transmission instruction sent by the second node based on a communication protocol, from a memory by a first node provided in the vehicle; and
establishing or training a target algorithm model based on the target data.

In example embodiments, before the receiving target data sent by a second node provided in a vehicle, the method further includes:
sending a configuration file to the second node, the configuration file being used to enable the second node to send, based on the communication protocol, the data transmission instruction to the first node according to the configuration file.

In example embodiments, the sending a configuration file to the second node includes:
acquiring a unique identification of the second node; and
sending the configuration file to the second node based on the unique identification.

In example embodiments, the target algorithm model is applied to an application corresponding to the vehicle.

In example embodiments, the third node includes a server.

In another aspect, an embodiment of the present application provides an apparatus for transmitting vehicle data, wherein the apparatus is applied to a first node provided in a vehicle, and the apparatus includes:
a first receiving module configured to receive, based on a communication protocol, a data transmission instruction sent by a second node provided in the vehicle;
a first processing module configured to acquire target data from a memory according to the data transmission instruction; and
a first sending module configured to send the target data to the second node based on the communication protocol, the target data being used to enable the second node to send the target data to a third node after receiving the target data, and the third node establishing or training a target algorithm model based on the target data after receiving the target data.

In another aspect, an embodiment of the present application provides an apparatus for transmitting vehicle data, wherein the apparatus is applied to a second node provided in a vehicle, and the apparatus includes:
a second sending module configured to send, based on a communication protocol and according to a configuration file, a data transmission instruction to a first node provided in the vehicle, the data transmission instruction being used to trigger the first node to acquire target data from a memory according to the data transmission instruction; and
a second receiving module configured to receive, based on the communication protocol, the target data sent by the first node;
the second receiving module being also configured to send the target data to a third node, the target data being used to enable the third node to establish or train a target algorithm model based on the target data after receiving the target data.

In another aspect, an embodiment of the present application provides an apparatus for transmitting vehicle data, wherein the apparatus is applied to a third node, and the apparatus includes:
a third receiving module configured to receive target data sent by a second node provided in a vehicle, the target data being acquired, according to a data transmission instruction sent by the second node based on a communication protocol, from a memory by a first node provided in the vehicle; and
a second processing module configured to establish or train a target algorithm model based on the target data.

In another aspect, an embodiment of the present application provides an electronic control unit, wherein the electronic control unit is provided in a vehicle, the electronic control unit includes a processor and a memory, at least one instruction or program is stored in the memory, and the instruction or program is loaded and executed by the processor to achieve the method for transmitting vehicle data executed by a first node in any one of the above embodiments.

In another aspect, an embodiment of the present application provides a communication device, wherein the communication device is provided in a vehicle, the communication device includes a processor and a memory, at least one instruction or program is stored in the memory, and the instruction or program is loaded and executed by the processor to achieve the method for transmitting vehicle data executed by a second node in any one of the above embodiments.

In another aspect, an embodiment of the present application provides a server, wherein the server includes a processor and a memory, at least one instruction or program is stored in the memory, and the instruction or program is loaded and executed by the processor to achieve the method for transmitting vehicle data executed by a third node in any one of the above embodiments.

In another aspect, an embodiment of the present application provides a system for transmitting vehicle data, including a first node, a second node, and a third node, wherein a communication connection is established between the first node and the second node based on a communication protocol, and a wireless communication connection is established between the second node and the third node;
the first node includes an electronic control unit according to claim 19;
the second node includes a communication device according to claim 20; and
the third node includes a server according to claim 21.

In another aspect, an embodiment of the present application provides a readable storage medium, wherein at least one instruction or program is stored in the readable storage medium, and the instruction or program is loaded and executed by a processor to achieve any one of the above methods for transmitting vehicle data.

The technical solutions of the present application at least includes the following advantages:

The first node provide in the vehicle acquires the target data from the memory according to the data transmission instruction, and sends, based on the communication protocol, the target data to the second node provide in the vehicle. The second node sends the target data to the third node in the cloud. The third node establishes or trains the target algorithm model based on the target data. Data transmission between various nodes does not require a communication matrix or respective data collection and test carried out by each node, solving the problem of low data transmission efficiency in the related art caused by the dependence of vehicle data transmission on the communication matrix and the need for respective data collection and test carried out by each node, and thereby improving the vehicle data transmission efficiency.

### BRIEF DESCRIPTION OF THE DRAWINGS

In order to more clearly explain the specific implementations of the present application or the technical solution in the related art, the drawings required in description of the specific implementations or the related art will be briefly described below. It is obvious that the drawings described below are some implementations of the present application, and those skilled in the art could also obtain other drawings on the basis of these drawings, without the exercise of any inventive skill.
FIG 1 is a topology diagram of a system for transmitting vehicle data provided in an exemplary embodiment of the present application.
FIG 2 is a flowchart of a method for transmitting vehicle data provided in an exemplary embodiment of the present application.
FIG 3 is a flowchart of a method for transmitting vehicle data provided in an exemplary embodiment of the present application.
FIG 4 is a roadmap for vehicle data transmission based on an XCP protocol provided in an exemplary embodiment of the present application.
FIG 5 is a block diagram of an apparatus for transmitting vehicle data provided in an exemplary embodiment of the present application.
FIG 6 is a block diagram of an apparatus for transmitting vehicle data provided in an exemplary embodiment of the present application.
FIG 7 is a block diagram of an apparatus for transmitting vehicle data provided in an exemplary embodiment of the present application.

### DETAILED DESCRIPTION OF THE DISCLOSURE

The technical solution of the present application will be clearly and completely described below with reference to the drawings. Obviously, the described embodiments are part of the embodiments of the present application, rather than all of them. Based on the embodiments in the present application, all other embodiments obtained by those skilled in the art without the exercise of any inventive skill shall fall into the protection scope of the present application.

In the description of the present application, it should be noted that the orientation or position relationship indicated by the terms "center", "upper", "lower", "left", "right", "vertical", "horizontal", "inner", "outer", etc. is based on the orientation or position relationship shown in the drawings, intended only for the convenience of describing the present application and simplifying the description, rather than indicating or implying that the apparatus or element referred to necessarily has a specific orientation or is configured or operated in a specific orientation, and thus cannot be construed as a limitation on the present application. In addition, the terms "first", "second", and "third" are used for descriptive purposes only, and cannot be construed as indicating or implying relative importance.

In the description of the present application, it should be noted that, unless otherwise clearly specified and defined, the terms "mounting", "coupling", and "connecting" should be understood in a broad sense, for example, it can be a fixed connection, a detachable connection, or an integrated connection, can be a mechanical connection or an electrical connection, can be a direct connection, an indirect connection implemented by means of an intermedium, or an internal connection between two components, and can be a wireless connection or a wired connection. Those skilled in the art could understand the specific meanings of the above terms in the present application on the basis of specific situations.

In addition, the technical features involved in different embodiments of the present application described below can be combined with each other in the case of no conflict.

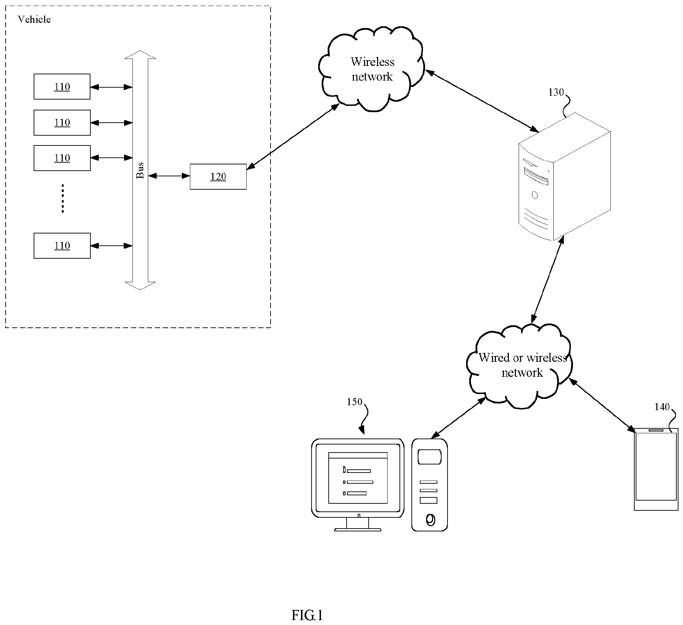

Referring to FIG 1, which is a topology diagram of a system for transmitting vehicle data provided in an exemplary embodiment of the present application, the transmission system includes at least one first node 110, a second node 120, and a third node 130, wherein the first node 110 and the second node 120 are provided in a vehicle, the first node 110 and the second node 120 establish a communication connection by means of a bus (the bus mat be a CAN bus) based on the same communication protocol integrated therein, and the second node 120 and the third node 130 establish a communication connection by means of a wireless network.

The first node 110 may be referred to as a slave node, and the second node 120 may be referred to as a master node.

Each slave node can directly access and/or acquire data in a memory of each node according to a data transmission instruction of the master node (e.g., an access carried out according to an address in the memory and/or variable data in the memory), without collecting required data by itself. The first node 110 and the second node 120 form a vehicle-mounted electronic control system of the vehicle by means of the bus and the communication protocol.

In example embodiments, the first node 110 includes an electronic control unit. The electronic control unit includes a processor and a memory, at least one instruction or program is stored in the memory, and the instruction or program is loaded by the processor to execute a method for transmitting vehicle data executed by the first node 110 in any one of the following embodiments.

The second node 120 includes a communication device, and the communication device may be a Tbox, a smart gateway, or other external communication devices. The communication device includes a processor and a memory, at least one instruction or program is stored in the memory, and the instruction or program is loaded by the processor to execute a method for transmitting vehicle data executed by the second node 120 in any one of the following embodiments.

The second node 120 can establish a communication connection with the third node 130 by means of a long term evolution (LTE) network or 5th generation mobile networks (5G).

The third node 130 may establish or train a target algorithm model based on the target data sent by the second node 120. In example embodiments, the third node 130 includes a server. The server includes a processor and a memory, at least one instruction or program is stored in the memory, and the instruction or program is loaded by the processor to execute a method for transmitting vehicle data executed by the third node 130 in any one of the following embodiments.

Exemplarily, the target algorithm model can be applied to an application corresponding to the vehicle. A user terminal 140 with the application installed can establish a communication connection with the third node 130 by means of a wired or wireless network. A big data application of the vehicle data can be achieved by means of the target algorithm model. A demand side (which is usually a developer of the target application) can establish a communication connection with the third node 130 using a development terminal 150 by means of a wired or wireless network, determine target data to be acquired, and creates, based on the target data, a configuration file that triggers the second node 120 to send the data transmission instruction.

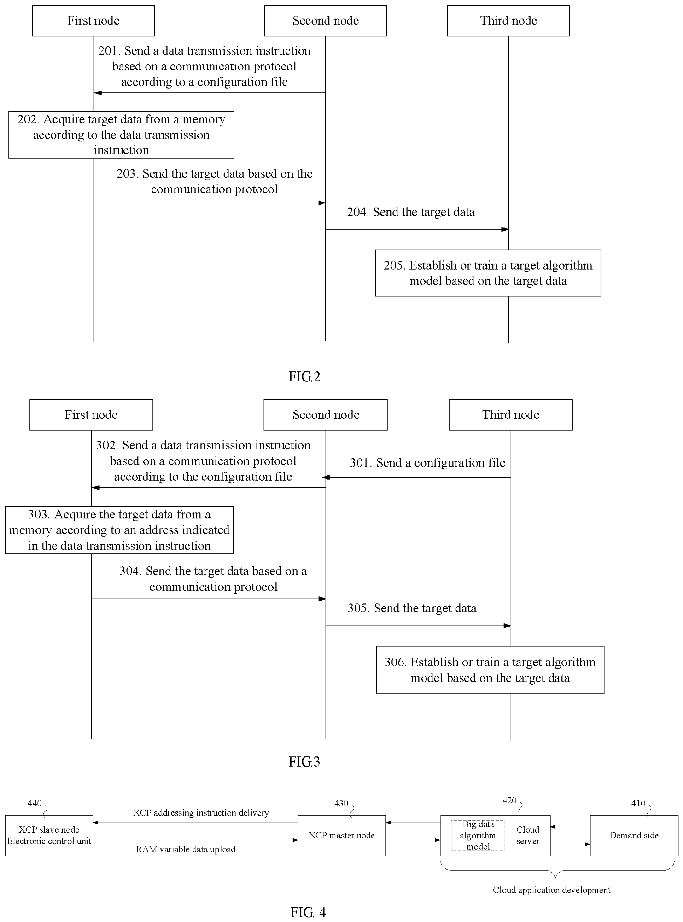

Referring to FIG 2, which is a flowchart of a method for transmitting vehicle data provided in an exemplary embodiment of the present application, the method can be applied to the transmission system of the embodiment shown in FIG 1, and the method includes the following steps.

Step 201. A second node sends a data transmission instruction to a first node based on a communication protocol according to a configuration file.

The following is an exemplary explanation of the embodiment of the present application with the first node being an electronic control unit, the second node being a communication device, and a third node being a server.

For example, the configuration file includes an electronic control unit corresponding to target data, such as an electronic control unit A₁, an electronic control unit A₂, an electronic control unit A₃, ..., and an electronic control unit A_{N} (N is a natural number, and N≥1) connected to the communication device by means of a bus. The target data is target data a₁ in a memory of the electronic control unit A₁, and target data a₂ in a memory of the electronic control unit A₂.

After reading the configuration file, the communication device sends a data transmission instruction 1 to the electronic control unit A₁ and a data transmission instruction 2 to the electronic control unit A₂ based on the communication protocol according to an instruction of the configuration file. The transmission instruction 1 is used to instruct the electronic control unit A₁ to send the target data a₁, and the transmission instruction 2 is used to instruct the electronic control unit A₂ to send the target data a₂.

In example embodiments, the target data a₁ may be variable data stored in a random access memory (RAM) of the electronic control unit A₁.

Step 202. The first node acquires target data from a memory according to the data transmission instruction.

The first node may be any first node in the embodiment shown in FIG 1. Taking the electronic control unit A₁ as an example, an exemplary explanation of the method executed by the first node involved in the embodiment of the present application is given below.

After receiving the data transmission instruction 1 based on the communication protocol, the electronic control unit A₁ directly acquires the target data a₁ from the memory thereof. In example embodiments, the data transmission instruction carries an address of the target data in the memory. For example, the data transmission instruction includes an addressing instruction, and the electronic control unit A₁ accesses and acquires, according to an address of the target data a₁ in the RAM thereof carried in the data transmission instruction 1, the target data a₁ in the variable data stored in the RAM.

Since the first node directly acquires the target data from the memory thereof according to the transmission instruction, the first node does not need to perform data collection and test, thereby improving the acquisition efficiency of the target data.

Step 203. The first node sends the target data to the second node based on the communication protocol.

For example, after acquiring the target data a₁, the electronic control unit A₁ sends the target data a₁ to the communication device by means of the bus based on the communication protocol.

In the embodiment of the present application, the acquisition of the target data does not require respective data collection and test carried out by each electronic control unit that needs to acquire data in the vehicle-mounted electronic control system, but requires only a direct access to the memory carried out by the electronic control unit according to data transmission instruction. Moreover, the communication connection between the first node and the second node is based on the same communication protocol and does not depend on a communication matrix.

Step 204. The second node sends the target data to a third node.

For example, as described above, after receiving, based on the communication protocol, the target data a₁ sent by the electronic control unit A₁ and the target data a₂ sent by the electronic control unit A₂, the communication device sends the target data a₁ and target data a₂ to the server in the cloud by means of a wireless network.

Step 205. The third node establishes or trains a target algorithm model based on the target data.

For example, after receiving the target data sent by the communication device by means of the wireless network, the server establishes or trains the target algorithm model based on the target data, or the target data and target data sent by other communication devices of the vehicle.

To sum up, in the embodiment of the present application, the first node provide in the vehicle acquires the target data from the memory according to the data transmission instruction, and sends, based on the communication protocol, the target data to the second node provide in the vehicle. The second node sends the target data to the third node in the cloud. The third node establishes or trains the target algorithm model based on the target data. Data transmission between various nodes does not require a communication matrix or respective data collection and test carried out by each node, solving the problem of low data transmission efficiency in the related art caused by the dependence of vehicle data transmission on the communication matrix and the need for respective data collection and test carried out by each node, and thereby improving the vehicle data transmission efficiency.

Referring to FIG 3, which is a flowchart of a method for transmitting vehicle data provided in an exemplary embodiment of the present application, the method can be applied to the transmission system of the embodiment shown in FIG 1, and the method includes the following steps.

Step 301. A third node sends a configuration file to a second node.

In example embodiments, the second node has a corresponding unique identification. A two-way communication is established between the second node and the third node by means of a wireless network. After acquiring the unique identification of the second node, the third node generates the configuration file based on the unique identification.

For example, if target data to be collected from a vehicle of a vehicle model T₁ is target data a₁ in a memory of an electronic control unit A₁ and target data a₂ in a memory of an electronic control unit A₂, a configuration file corresponding to the vehicle of the vehicle model T₁ can be generated based on the target data a₁ and the first node A₁ corresponding thereto as well as the target data a₂ and the electronic control unit A₂ corresponding thereto. The configuration file includes an address of the target data, e.g., an address 1 of the target data a₁ in a RAM of the electronic control unit A₁ and an address 2 of the target data a₂ in a RAM of the electronic control unit A₂.

A unique identification of a communication device corresponds to the model of a vehicle where the communication device is provided. After obtaining the unique identification of the communication device, a server searches for a corresponding vehicle model according to the unique identification, thereby assigning a corresponding configuration file to the communication device.

Step 302. The second node sends a data transmission instruction to a first node based on a communication protocol according to the configuration file.

In example embodiments, the communication protocol integrated in the second node is an XCP protocol or a UDS protocol.

After receiving the configuration file sent by the server by means of a wireless network, the communication device reads the configuration file based on the XCP protocol, and sends a data transmission instruction 1 to the electronic control unit A₁ and a data transmission instruction 2 to the electronic control unit A₂ based on the communication protocol according to an instruction of the configuration file. The transmission instruction 1 is used to instruct the electronic control unit A₁ to send the target data a₁, and the transmission instruction 2 is used to instruct the electronic control unit A₂ to send the target data a₂.

Step 303. The first node acquires the target data from a memory according to an address indicated in the data transmission instruction.

The first node may be any first node in the embodiment shown in FIG 1. Taking the electronic control unit A₁ as an example, an exemplary explanation of the method executed by the first node involved in the embodiment of the present application is given below.

A communication protocol integrated in the first node is the same as that in the second node. If the communication protocol integrated in the second node is an XCP protocol, the communication protocol integrated in the first node is an XCP protocol, and if the communication protocol integrated in the second node is a UDS protocol, the communication protocol integrated in the first node is a UDS protocol.

The following explanation is givn with the communication protocol being the XCP protocol.

After receiving the data transmission instruction 1 based on the XCP protocol, the electronic control unit A₁ acquires the target data a₁ from the RAM by means of a dynamic data acquisition function according to the address 1 indicated in the data transmission instruction 1.

Step 304. The first node sends the target data to the second node based on a communication protocol.

For example, after acquiring the target data a₁, the electronic control unit A₁ sends the target data a₁ to the communication device by means of a bus based on the XCP protocol.

Step 305. The second node sends the target data to the third node.

For example, as described above, after receiving, based on the communication protocol, the target data a₁ sent by the electronic control unit A₁ and the target data a₂ sent by the electronic control unit A₂, the communication device sends the target data a₁ and target data a₂ to the server in the cloud by means of a wireless network.

Step 306. The third node establishes or trains a target algorithm model based on the target data.

For example, after receiving the target data sent by the communication device by means of the wireless network, the server establishes or trains the target algorithm model based on the target data, or the target data and target data sent by other communication devices of the vehicle.

An exemplary explanation of the method for transmitting vehicle data in the embodiment of the present application is given below.

Referring to FIG 4, which is a roadmap for vehicle data transmission based on an XCP protocol provided in an exemplary embodiment of the present application.

A cloud server 420 sends a configuration file to an XCP master node 430 by means of a wireless network. The XCP master node 430 sends an XCP addressing instruction to an XCP slave node (electronic control unit) 440 by means of a CAN bus based on the XCP protocol according to the configuration file. The XCP slave node 440 acquires target variable data from a RAM thereof according to the XCP addressing instruction, and uploads target variable data to the XCP master node 430 by means of the CAN bus based on the XCP protocol. The XCP master node 430 receives the target variable data by means of the CAN bus based on the XCP protocol, and then sends the variable data to the cloud server 420 by means of the wireless network. After receiving the target variable data by means of the wireless network, cloud server 420 constructs a big data algorithm model or trains a big data algorithm model. A demand side 410 can connect to the cloud server 420 by means of a wired or wireless network to adopt the big data algorithm model for cloud application development.

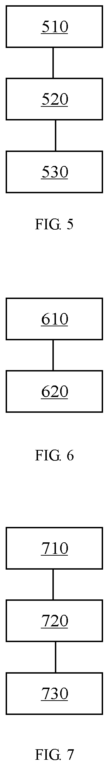

Referring to FIG 5, which is a block diagram of an apparatus for transmitting vehicle data provided in an exemplary embodiment of the present application, the apparatus can be applied to the first node 110 in the embodiment shown in FIG 1, and the apparatus includes:
a first receiving module 510 configured to receive, based on a communication protocol, a data transmission instruction sent by a second node provided in the vehicle;
a first processing module 520 configured to acquire target data from a memory according to the data transmission instruction; and
a first sending module 530 configured to send the target data to the second node based on the communication protocol, the target data being used to enable the second node to send the target data to a third node after receiving the target data, and the third node establishing or training a target algorithm model based on the target data after receiving the target data.

In example embodiments, the first processing module 520 is also configured to acquire the target data from the memory according to an address indicated in the data transmission instruction.

In example embodiments, the first processing module 520 is also configured to acquire the target data from the address by means of a dynamic data acquisition function in the communication protocol.

In example embodiments, the communication protocol is an XCP protocol or a UDS protocol.

Referring to FIG 6, which is a block diagram of an apparatus for transmitting vehicle data provided in an exemplary embodiment of the present application, the apparatus can be applied to the second node 120 in the embodiment shown in FIG 1, and the apparatus includes:
a second sending module 610 configured to send, based on a communication protocol and according to a configuration file, a data transmission instruction to a first node provided in the vehicle, the data transmission instruction being used to trigger the first node to acquire target data from a memory according to the data transmission instruction; and
a second receiving module 620 configured to receive, based on the communication protocol, the target data sent by the first node.

The second receiving module 620 is also configured to send the target data to a third node, the target data being used to enable the third node to establish or train a target algorithm model based on the target data after receiving the target data.

In example embodiments, the second receiving module 620 is also configured to receive the configuration file sent by the third node.

In example embodiments, the configuration file is generated by the third node based on a unique identification of the second node.

In example embodiments, the configuration file includes an address of the target data in the memory. The second transmission module 610 is also configured to send the data transmission instructions to the first node based on the communication protocol according to the address indicated in the configuration file, the data transmission instruction carrying the address.

In example embodiments, when a communication protocol integrated in the first node is an XCP protocol, the communication protocol integrated in the second node is an XCP protocol; and when the communication protocol integrated in the first node is a UDS protocol, the communication protocol integrated in the second node is a UDS protocol.

Referring to FIG 7, which is a block diagram of an apparatus for transmitting vehicle data provided in an exemplary embodiment of the present application, the apparatus can be applied to the third node 130 in the embodiment shown in FIG 1, and the apparatus includes:

a third receiving module 710 configured to receive target data sent by a second node provided in a vehicle, the target data being acquired, according to a data transmission instruction sent by the second node based on a communication protocol, from a memory by a first node provided in the vehicle; and
a second processing module 720 configured to establish or train a target algorithm model based on the target data.

In example embodiments, the apparatus further includes a third sending module 730 configured to send a configuration file to the second node, the configuration file being used to enable the second node to send the data transmission instruction to the first node according to the configuration file based on the communication protocol.

In example embodiments, the second processing module 720 is also configured to acquire a unique identification of the second node. The third sending module 730 is also configured to send the configuration file to the second node based on the unique identification.

In example embodiments, the target algorithm model is applied to an application corresponding to the vehicle.

The present application also provides a readable storage medium, wherein at least one instruction, at least one program, a code set, or an instruction set is stored in the storage medium. The at least one instruction, the at least one program, the code set, or the instruction set is loaded and executed by a processor to achieve the method for transmitting vehicle data in any one of the above embodiments.

The present application also provides a computer program product, wherein when run on a computer, the computer program product enables a computer to execute the method for transmitting vehicle data in any one of the above embodiments.

Obviously, the above embodiments are merely examples used for clear description, rather than for limitation on the implementations. Those skilled in the art could also make other changes or modifications in different forms on the basis of the above description. There is no need or way to exhaustively list all of the implementations herein, but obvious changes or modifications derived herefrom still fall within the protection scope created by the present application.

## Claims

1. A method for transmitting vehicle data, wherein the method is executed by a first node provided in a vehicle, and the method comprises:
receiving, based on a communication protocol, a data transmission instruction sent by a second node provided in the vehicle;
acquiring target data from a memory according to the data transmission instruction; and
sending the target data to the second node based on the communication protocol, the target data being used to enable the second node to send the target data to a third node after receiving the target data, and the third node establishing or training a target algorithm model based on the target data after receiving the target data.

2. The method according to claim 1, wherein the data transmission instruction carries an address of the target data in the memory; and
the acquiring target data from a memory according to the data transmission instruction comprises:
acquiring the target data from the memory according to the address indicated in the data transmission instruction.

3. The method according to claim 2, wherein the acquiring the target data from the memory comprises:
acquiring the target data from the address by means of a dynamic data acquisition function in the communication protocol.

4. The method according to any one of claims 1-3, wherein the first node comprises an electronic control unit.

5. The method according to claim 4, wherein the communication protocol is an XCP protocol or a UDS protocol.

6. A method for transmitting vehicle data, wherein the method is executed by a second node provided in a vehicle, and the method comprises:
sending, based on a communication protocol and according to a configuration file, a data transmission instruction to a first node provided in the vehicle, the data transmission instruction being used to trigger the first node to acquire target data from a memory according to the data transmission instruction;
receiving, based on the communication protocol, the target data sent by the first node; and
sending the target data to a third node, the target data being used to enable the third node to establish or train a target algorithm model based on the target data after receiving the target data.

7. The method according to claim 6, before the receiving target data sent by the first node provided in the vehicle, further comprising:
receiving the configuration file sent by the third node.

8. The method according to claim 7, wherein the configuration file is sent by the third node to the second node according to a unique identification of the second node.

9. The method according to claim 8, wherein the configuration file comprises an address of the target data in the memory; and
the sending, based on a communication protocol and according to a configuration file, a data transmission instruction to a first node provided in the vehicle comprises:
sending, based on the communication protocol and according to the address indicated in the configuration file, the data transmission instruction to the first node, the data transmission instruction carrying the address.

10. The method according to any one of claims 6-9, wherein when a communication protocol integrated in the first node is an XCP protocol, the communication protocol integrated in the second node is an XCP protocol; and
when the communication protocol integrated in the first node is a UDS protocol, the communication protocol integrated in the second node is a UDS protocol.

11. The method according to any one of claims 6-10, wherein the second node comprises a Tbox or a smart gateway.

12. A method for transmitting vehicle data, wherein the method is executed by a third node, and the method comprises:
receiving target data sent by a second node provided in a vehicle, the target data being acquired, according to a data transmission instruction sent by the second node based on a communication protocol, from a memory by a first node provided in the vehicle; and
establishing or training a target algorithm model based on the target data.

13. The method according to claim 12, before the receiving target data sent by a second node provided in a vehicle, further comprising:
sending a configuration file to the second node, the configuration file being used to enable the second node to send, based on the communication protocol, the data transmission instruction to the first node according to the configuration file.

14. The method according to claim 13, wherein the sending a configuration file to the second node comprises:
acquiring a unique identification of the second node; and
sending the configuration file to the second node based on the unique identification.

15. The method according to any one of claims 12-14, wherein the target algorithm model is applied to an application corresponding to the vehicle.

16. The method according to any one of claims 12-15, wherein the third node comprises a server.

17. An apparatus for transmitting vehicle data, wherein the apparatus is applied to a first node provided in a vehicle, and the apparatus comprises:
a first receiving module configured to receive, based on a communication protocol, a data transmission instruction sent by a second node provided in the vehicle;
a first processing module configured to acquire target data from a memory according to the data transmission instruction; and
a first sending module configured to send the target data to the second node based on the communication protocol, the target data being used to enable the second node to send the target data to a third node after receiving the target data, and the third node establishing or training a target algorithm model based on the target data after receiving the target data.

18. An apparatus for transmitting vehicle data, wherein the apparatus is applied to a second node provided in a vehicle, and the apparatus comprises:
a second sending module configured to send, based on a communication protocol and
according to a configuration file, a data transmission instruction to a first node provided in the vehicle, the data transmission instruction being used to trigger the first node to acquire target data from a memory according to the data transmission instruction; and
a second receiving module configured to receive, based on the communication protocol,
the target data sent by the first node;
the second receiving module being also configured to send the target data to a third node,
the target data being used to enable the third node to establish or train a target algorithm model based on the target data after receiving the target data.

19. An apparatus for transmitting vehicle data, wherein the apparatus is applied to a third node, and the apparatus comprises:
a third receiving module configured to receive target data sent by a second node provided in a vehicle, the target data being acquired, according to a data transmission instruction sent by the second node based on a communication protocol, from a memory by a first node provided in the vehicle; and
a second processing module configured to establish or train a target algorithm model based on the target data.

20. An electronic control unit, wherein the electronic control unit is provided in a vehicle, the electronic control unit comprises a processor and a memory, at least one instruction or program is stored in the memory, and the instruction or program is loaded and executed by the processor to achieve the method for transmitting vehicle data according to in any one of claims 1-6.

21. A communication device, wherein the communication device is provided in a vehicle, the communication device comprises a processor and a memory, at least one instruction or program is stored in the memory, and the instruction or program is loaded and executed by the processor to achieve the method for transmitting vehicle data according to in any one of claims 7-11.

22. A server, wherein the server comprises a processor and a memory, at least one instruction or program is stored in the memory, and the instruction or program is loaded and executed by the processor to achieve the method for transmitting vehicle data according to in any one of claims 12-16.

23. A system for transmitting vehicle data, comprising a first node, a second node, and a third node, wherein a communication connection is established between the first node and the second node based on a communication protocol, and a wireless communication connection is established between the second node and the third node;
the first node comprises an electronic control unit according to claim 19;
the second node comprises a communication device according to claim 20; and
the third node comprises a server according to claim 21.

24. A readable storage medium, wherein at least one instruction or program is stored in the readable storage medium, and the instruction or program is loaded and executed by a processor to achieve the method for transmitting vehicle data according to in any one of claims 1-16.
